# EUROPEAN PATENT SPECIFICATION

(11) **EP 2 985 491 B1**
(45) Date of publication and mention of the grant of the patent: **10.07.2019**
(21) Application number: 14783018.6
(22) Date of filing: 10.01.2014
(51) Int. Cl.: F16H 37/02

(54) **MECHANICALLY OPERATIONAL STRUCTURE FOR CONTINUOUSLY VARIABLE TRANSMISSION**
MECHANISCHE BETREIBBARE STRUKTUR FÜR EIN STUFENLOSES GETRIEBE
STRUCTURE MÉCANIQUEMENT FONCTIONNELLE POUR TRANSMISSION À VARIATION CONTINUE

(30) Priority: 07.04.2013 CN 201310117401
(43) Date of publication of application: 17.02.2016
(73) Proprietor: Hou, Yafeng, Taiyuan, Shanxi 030006 (CN)
(72) Inventor: Hou, Yafeng, Taiyuan, Shanxi 030006 (CN)
(74) Representative: Bingham, Ian Mark
(86) International application number: PCT/CN2014/000031
(87) International publication number: WO 2014/166295

(56) References cited:
- CN-A- 102 678 857
- CN-A- 103 234 015
- CN-U- 201 916 451
- CN-U- 202 165 541
- GB-A- 214 634
- GB-A- 726 382
- JP-A- H1 061 739
- US-A- 2 545 152

## Description

### Technical Field

The present invention relates to continuously variable speed technology, in particular to a mechanically operational arrangement for continuously variable transmission, according to the preamble of claim 1 and as it is discloses in CN102678857A.

### Background

Continuous variability refers to transmitting power through variable transmission arrangement by means of cooperation of driving wheel and driven wheel with variable operation diameters so as to achieve continuously variable transmission ratio, such that optimized match of the power train and the engine working condition is achievable. The prior art continuously variable transmission arrangement conventionally includes steel-belt continuously variable transmission arrangement, roller-turn plate continuously variable transmission arrangement or the like. The steel-belt continuously variable transmission arrangement has the problem that the steel belt is prone to failure, while the roller-turn plate continuously variable transmission arrangement has the problems of structural complexity and inconvenient maintenance. Accordingly, there is a need for a novel continuously variable transmission arrangement that is able to solve the aforesaid problems existing in the prior art continuously variable transmission arrangements.

### Summary

The present invention provides a mechanically operational arrangement for continuously variable transmission, to solve the prior art continuously variable transmission arrangements' problems of easily damaged steel belt, structural complexity and inconvenient maintenance.

The present invention is achieved in the following technical solution: a mechanically operational arrangement for continuously variable transmission, comprises the features of claim 1.

The operation process is as follows: during the change of speed ratio, the central shaft or shaft sleeve is moved in an axial direction of the shaft sleeve, such that a relative movement between the central shaft and shaft sleeve is made. By means of the combined action of the relative movement and the inter-meshing between the arc-shaped toothed wheel section and the toothed groove section, the connecting plate acts a seesaw-like movement in the axial direction of the shaft sleeve (as shown in Figs. 15 and 16), such that the change of speed ratio is achieved. On such basis, multiple changes of speed ratio can be achieved by connecting two said mechanically operational arrangements for continuously variable transmission in series (as shown in Fig. 17) or in parallel (as shown in Fig. 18). In view of the process above, the mechanically operational arrangement for continuously variable transmission in the present disclosure is based on a brand new transmission arrangement and principle, and solves the problem of easily damaged steel belt, with simpler arrangement and convenient maintenance, compared with the prior art continuously variable transmission arrangements.

The present invention, based on the brand new transmission arrangement and principle, effectively solves the problems of easily damaged steel belt, structural complexity and inconvenient maintenance, and is suitable for variable transmission of the vehicles.

### Description of Drawings

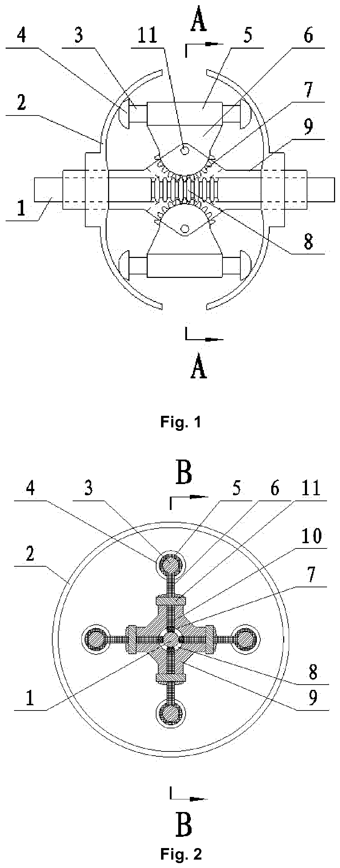

Fig. 1 illustrates a schematically structural view of the arrangement of Embodiment 1 of the present invention.
Fig. 2 is a sectional view through the line A-A of Fig. 1.

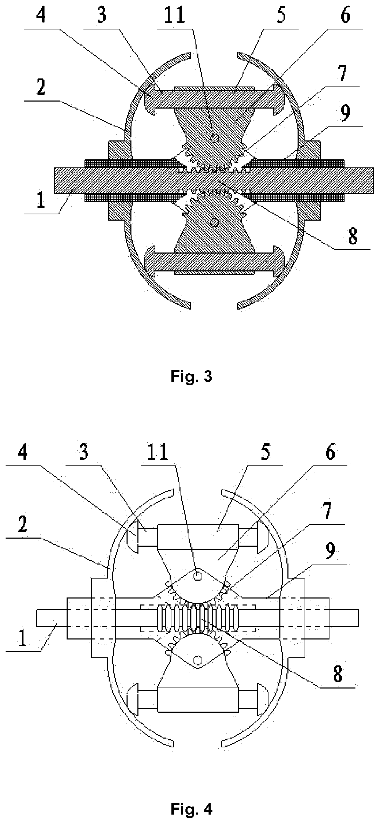

Fig. 3 is a sectional view through the line B-B of Fig. 2.
Fig. 4 illustrates a schematically structural view of Embodiment 2 of the present invention.

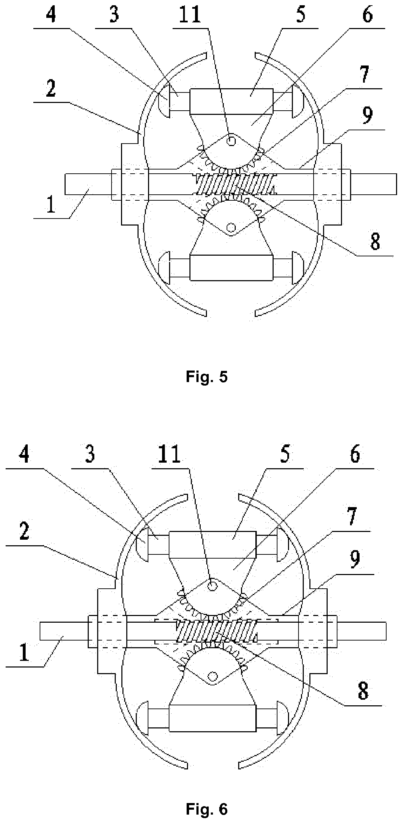

Fig. 5 illustrates a schematically structural view of Embodiment 3 of the present invention.
Fig. 6 illustrates a schematically structural view of Embodiment 4 of the present invention.

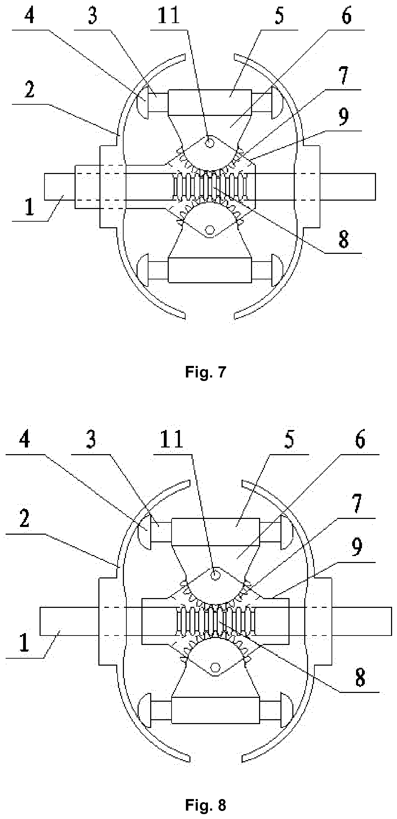

Fig. 7 illustrates a schematically structural view of Embodiment 5 of the present invention.
Fig. 8 illustrates a schematically structural view of Embodiment 6 of the present invention.

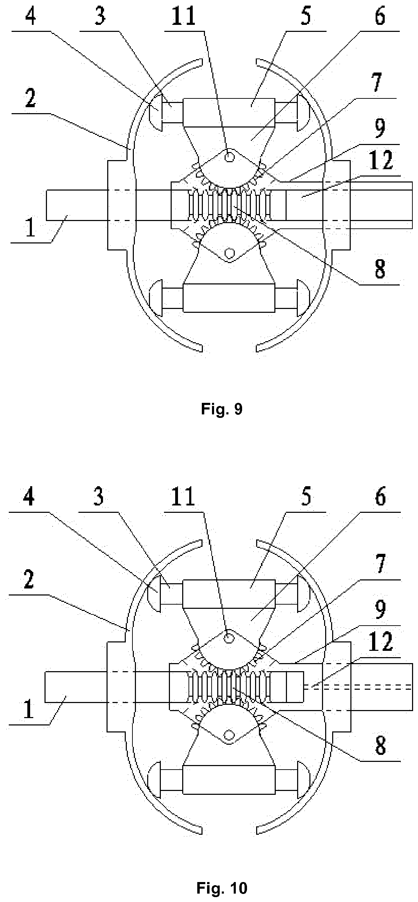

Fig. 9 illustrates a schematically structural view of Embodiment 7 of the present invention.
Fig. 10 illustrates a schematically structural view of Embodiment 8 of the present invention.

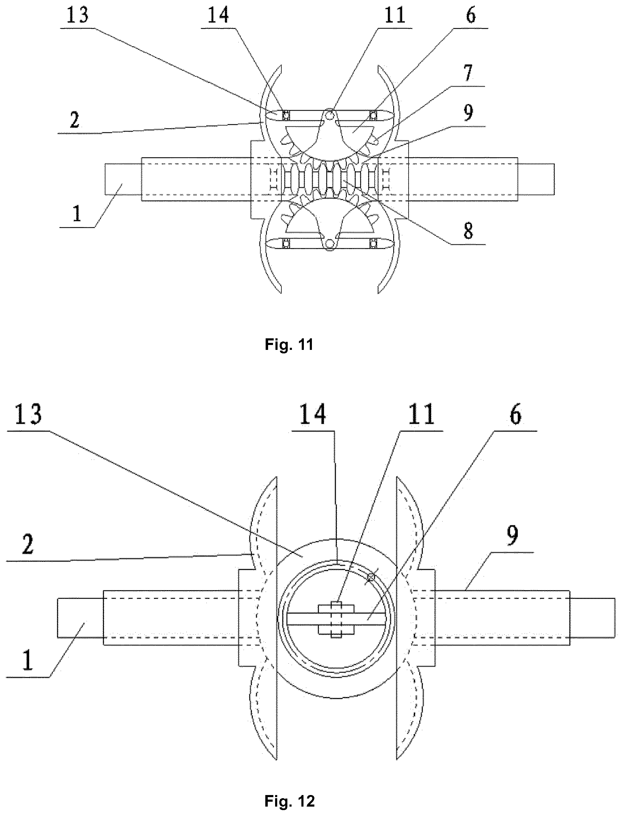

Fig. 11 illustrates a first schematically structural view of Embodiment 9 of the present invention.
Fig. 12 is a top view of Fig. 11.

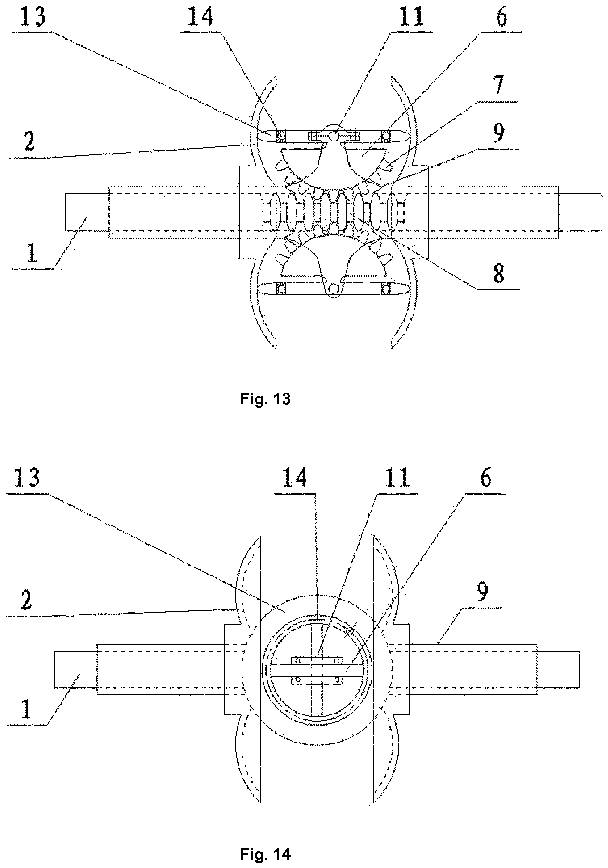

Fig. 13 illustrates a second schematically structural view of Embodiment 9 of the present invention.
Fig. 14 is a top view of Fig. 13.

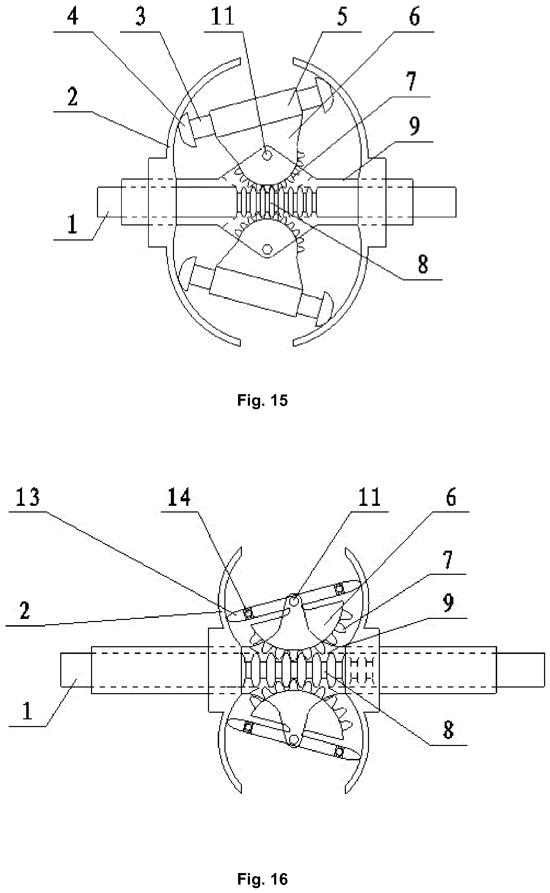

Fig. 15 is a schematic view of the present invention in first operational state.
Fig. 16 is a schematic view of the present invention in second operational state.

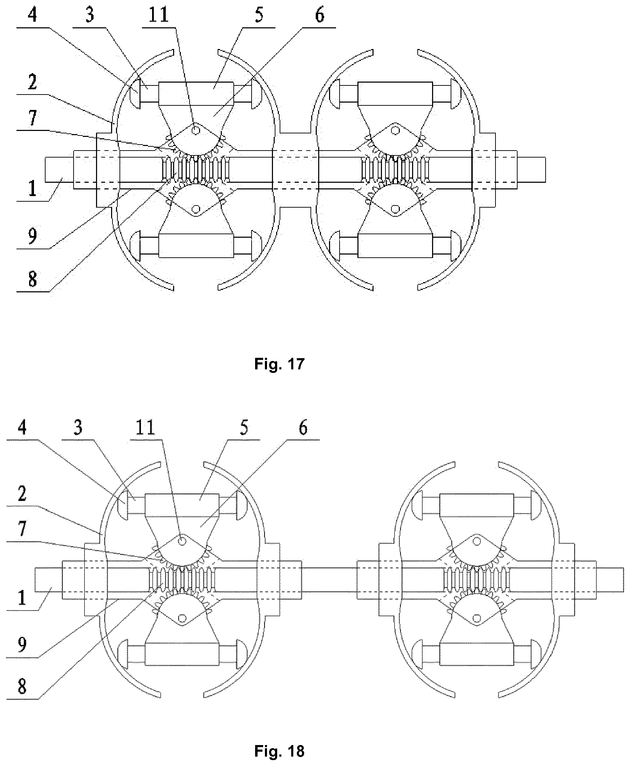

Fig. 17 is a schematic view of the present invention in third operational state.
Fig. 18 is a schematic view of the present invention in fourth operational state.

### Reference Signs in the Drawings:

1- central shaft; 2 - bowl-shaped wheel; 3 -cylindrical wheel; 4 - wheel cap; 5 -wheel sleeve; 6 - connecting plate; 7 - arc-shaped toothed wheel section; 8 - toothed groove section; 9 -shaft sleeve; 10 - axial limiting groove; 11 - pivot; 12 - axial through-hole; 13 - annular wheel; 14 - bearing.

### Detailed Description of Embodiments

### Embodiment 1

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter smaller than or equal to a diameter of the central shaft 1, as shown in Figs. 1-3.

A bowl-shaped wheel 2 is mounted on either end of the central shaft 1, with bowl openings of the two bowl-shaped wheels 2 facing towards each other.

Two ends of the shaft sleeve 9 are respectively inserted through bowl bottom centers of the two bowl-shaped wheels 2. Two ends of the central shaft 1 are respectively inserted through the bowl bottom centers of the two bowl-shaped wheels 2.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to shaft fitting. The cylindrical wheel and the shaft sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 2

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter greater than a diameter of the central shaft 1, as shown in Fig. 4.

A bowl-shaped wheel 2 is mounted on either end of the central shaft 1, with bowl openings of the two bowl-shaped wheels 2 facing towards each other.

Two ends of the shaft sleeve 9 are respectively inserted through bowl bottom centers of the two bowl-shaped wheels 2. Two ends of the central shaft 1 are respectively inserted through the bowl bottom centers of the two bowl-shaped wheels 2.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 3

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is a spiral toothed groove section with an outer diameter smaller than or equal to a diameter of the central shaft 1, as shown in Fig. 5.

A bowl-shaped wheel 2 is mounted on either end of the central shaft 1, with bowl openings of the two bowl-shaped wheels 2 facing towards each other.

Two ends of the shaft sleeve 9 are respectively inserted through bowl bottom centers of the two bowl-shaped wheels 2. Two ends of the central shaft 1 are respectively inserted through the bowl bottom centers of the two bowl-shaped wheels 2.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 4

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is a spiral toothed groove section with an outer diameter greater than a diameter of the central shaft 1, as shown in Fig. 6.

A bowl-shaped wheel 2 is mounted on either end of the central shaft 1, with bowl openings of the two bowl-shaped wheels 2 facing towards each other.

Two ends of the shaft sleeve 9 are respectively inserted through bowl bottom centers of the two bowl-shaped wheels 2. Two ends of the central shaft 1 are respectively inserted through the bowl bottom centers of the two bowl-shaped wheels 2.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 5

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter smaller than or equal to a diameter of the central shaft 1, as shown in Fig. 7.

A bowl-shaped wheel 2 is mounted on either end of the central shaft 1, with bowl openings of the two bowl-shaped wheels 2 facing towards each other.

One end of the shaft sleeve 9 is inserted through a bowl bottom center of one of the bowl-shaped wheels 2 and the other end of the shaft sleeve 9 is positioned between the bowl openings of the two bowl-shaped wheels 2. Two ends of the central shaft 1 are respectively inserted through the bowl bottom centers of the two bowl-shaped wheels 2.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 6

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter smaller than or equal to a diameter of the central shaft 1, as shown in Fig. 8.

A bowl-shaped wheel 2 is mounted on either end of the central shaft 1, with bowl openings of the two bowl-shaped wheels 2 facing towards each other.

Two ends of the shaft sleeve 9 are both positioned between the bowl openings of the two bowl-shaped wheels 2. Two ends of the central shaft 1 are respectively inserted through bowl bottom centers of the two bowl-shaped wheels 2.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 7

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter smaller than or equal to a diameter of the central shaft 1, as shown in Fig. 9.

A bowl-shaped wheel 2 is mounted on either end of the central shaft 1, with bowl openings of the two bowl-shaped wheels 2 facing towards each other.

One end of the shaft sleeve 9 is inserted through a bowl bottom center of one of the bowl-shaped wheels 2, and in an end face thereof is provided with an axial through-hole 12 and the other end of the shaft sleeve 9 is positioned between the bowl openings of the two bowl-shaped wheels 2. One end of the central shaft 1 is inserted through the bowl bottom center of the other bowl-shaped wheel 2, and the other end of the central shaft 1 is positioned between the bowl openings of the two bowl-shaped wheels 2.

The axial through-hole 12 has an inner diameter equal to an outer diameter of the central shaft 1.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 8

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter smaller than or equal to a diameter of the central shaft 1, as shown in Fig. 10.

A bowl-shaped wheel 2 is mounted on either end of the central shaft 1, with bowl openings of the two bowl-shaped wheels 2 facing towards each other.

One end of the shaft sleeve 9 is inserted through a bowl bottom center of one of the bowl-shaped wheels 2, and in an end face thereof is provided with an axial through-hole 12 and the other end of the shaft sleeve 9 is positioned between the bowl openings of the two bowl-shaped wheels 2. One end of the central shaft 1 is inserted through the bowl bottom center of the other bowl-shaped wheel 2, and the other end of the central shaft 1 is positioned between the bowl openings of the two bowl-shaped wheels 2.

The axial through-hole 12 has an inner diameter smaller than an outer diameter of the central shaft 1.

Provided between the bowl openings of the two bowl-shaped wheels 2 are a plurality of cylindrical wheels 3 that are circumferentially arranged in an equal space. The cylindrical wheels 3 are of the same amount as the connecting plates 6. A wheel cap 4 is provided at either end of each cylindrical wheel 3, and the two wheel caps 4 of each cylindrical wheel 3 contact with inner faces of the two bowl-shaped wheels 2 respectively. Fitted over an external surface of each cylindrical wheel 3 is a wheel sleeve 5. The external surface of each wheel sleeve 5 is respectively fixed to an outer end face of one connecting plate 6.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

### Embodiment 9

A mechanically operational arrangement for continuously variable transmission comprises a central shaft 1. A toothed groove section 8 is circumferentially arranged in a middle portion of an external surface of the central shaft 1. A shaft sleeve 9 is fitted over the external surface of the central shaft 1. A plurality of axial limiting grooves 10 are provided on an external surface of the shaft sleeve 9. Inserted into each axial limiting groove 10 is a connecting plate 6. An arc-shaped toothed wheel section 7 is arranged on an inner end face of each connecting plate 6. Each of the arc-shaped toothed wheel sections 7 is meshed with the toothed groove section 8. A pivot 11 is mounted in a side face of each connecting plate 6. Each connecting plate 6 is respectively hinged to a groove wall of one axial limiting groove 10 via the respective pivot 11.

In this embodiment, the toothed groove section 8 is an equal-difference annular toothed groove section with an outer diameter smaller than or equal to a diameter of the central shaft 1, as shown in Figs. 11-14.

A bowl-shaped wheel 2 is mounted on either end of the central shaft 1, with bowl openings of the two bowl-shaped wheels 2 facing towards each other.

Two ends of the shaft sleeve 9 are respectively inserted through bowl bottom centers of the two bowl-shaped wheels 2. Two ends of the central shaft 1 are respectively inserted through the bowl bottom centers of the two bowl-shaped wheels 2.

Provided between the bowl openings of the two bowl-shaped wheels 2 are a plurality of annular wheels 3 that are circumferentially arranged in an equal space. The annular wheels 13 are of the same amount as the connecting plates 6. A bearing 14 is fitted into an inner circle of each annular wheel 13. Two symmetrical points on an inner circle of each bearing 14 are respectively fixed to two side faces of one connecting plate 6 respectively.

Two ends of each pivot 11 are extended to be fixed to the two symmetrical points on the inner circle of one bearing 14, as shown in Figs. 13-14.

When embodied, the bowl-shaped wheel and the shaft sleeve or the central shaft may form a bearing-to-shaft fitting. The cylindrical wheel and the wheel sleeve may also form a bearing-to-shaft fitting. During the change of speed ratio, the bowl-shaped wheel is rotated about the central shaft or the shaft sleeve, whilst the central shaft and shaft sleeve are not rotated.

In Embodiments 5-9, the toothed groove section on the central shaft, as an example, is embodied in a form of an equal-difference annular toothed groove section, which may, nevertheless, be replaced with spiral toothed groove section as desired. In Embodiments 1-9, the central shaft, as an example, has a cross section of round shape, which may, nevertheless, be replaced with other shapes, such as regular triangle, square or the like, as desired.

## Claims

1. A mechanically operational arrangement for continuously variable transmission, comprising a central shaft (1), **characterized by** a toothed groove section (8) is circumferentially arranged in a middle portion of an external surface of the central shaft (1); wherein a shaft sleeve (9) is fitted over the external surface of the central shaft (1); wherein a plurality of axial limiting grooves (10) are provided on an external surface of the shaft sleeve (9); wherein inserted into each axial limiting groove (10) is a connecting plate (6); wherein an arc-shaped toothed wheel section (7) is arranged on an inner end face of each connecting plate (6); wherein each of the arc-shaped toothed wheel sections (7) is meshed with the toothed groove section (8); wherein a pivot (11) is mounted in a side face of each connecting plate (6); and wherein each connecting plate (6) is respectively hinged to a groove wall of one axial limiting groove (10) via the respective pivot (11).

2. The mechanically operational arrangement for continuously variable transmission of claim 1, **characterized in that** the toothed groove section (8) is an equal-difference annular toothed groove section with an outer diameter smaller than or equal to a diameter of the central shaft (1).

3. The mechanically operational arrangement for continuously variable transmission of claim 1, **characterized in that** the toothed groove section (8) is an equal-difference annular toothed groove section with an outer diameter greater than a diameter of the central shaft (1).

4. The mechanically operational arrangement for continuously variable transmission of claim 1, **characterized in that** the toothed groove section (8) is a spiral toothed groove section with an outer diameter smaller than or equal to a diameter of the central shaft (1).

5. The mechanically operational arrangement for continuously variable transmission of claim 1, **characterized in that** the toothed groove section (8) is a spiral toothed groove section with an outer diameter greater than a diameter of the central shaft (1).

6. The mechanically operational arrangement for continuously variable transmission of any of claims 1-5, **characterized in that** a bowl-shaped wheel (2) is mounted on either end of the central shaft (1), with bowl openings of the two bowl-shaped wheels (2) facing towards each other.

7. The mechanically operational arrangement for continuously variable transmission of claim 6, **characterized in that** two ends of the shaft sleeve (9) respectively are inserted through bowl bottom centers of the two bowl-shaped wheels (2); and wherein two ends of the central shaft (1) respectively are inserted through the bowl bottom centers of the two bowl-shaped wheels (2).

8. The mechanically operational arrangement for continuously variable transmission of claim 6, **characterized in that** one end of the shaft sleeve (9) is inserted through a bowl bottom center of one of the bowl-shaped wheels (2) and the other end of the shaft sleeve (9) is positioned between the bowl openings of the two bowl-shaped wheels (2); and wherein two ends of the central shaft (1) respectively are inserted through the bowl bottom centers of the two bowl-shaped wheels (2).

9. The mechanically operational arrangement for continuously variable transmission of claim 6, **characterized in that** two ends of the shaft sleeve (9) are both positioned between the bowl openings of the two bowl-shaped wheels (2); and wherein two ends of the central shaft (1) respectively are inserted through bowl bottom centers of the two bowl-shaped wheels (2).

10. The mechanically operational arrangement for continuously variable transmission of claim 6, **characterized in that** one end of the shaft sleeve (9) is inserted through a bowl bottom center of one of the bowl-shaped wheels (2), and in an end face thereof is provided with an axial through-hole (12) and the other end of the shaft sleeve (9) is positioned between the bowl openings of the two bowl-shaped wheels (2); wherein one end of the central shaft (1) is inserted through the bowl bottom center of the other bowl-shaped wheel (2), and the other end of the central shaft (1) is positioned between the bowl openings of the two bowl-shaped wheels (2).

11. The mechanically operational arrangement for continuously variable transmission of claim 10, **characterized in that** the axial through-hole (12) has an inner diameter equal to an outer diameter of the central shaft (1).

12. The mechanically operational arrangement for continuously variable transmission of claim 10, **characterized in that** the axial through-hole (12) has an inner diameter smaller than an outer diameter of the central shaft (1).

13. The mechanically operational arrangement for continuously variable transmission of claim 6, **characterized in that** provided between the bowl openings of the two bowl-shaped wheels (2) are a plurality of cylindrical wheels (3) that are circumferentially arranged in an equal space; wherein the cylindrical wheels (3) are of the same amount as the connecting plates (6); wherein a wheel cap (4) is provided at either end of each cylindrical wheel (3), and the two wheel caps (4) of each cylindrical wheel (3) contact with inner faces of the two bowl-shaped wheels (2) respectively; wherein a wheel sleeve (5) is fitted over an external surface of each cylindrical wheel (3); and wherein the external surface of each wheel sleeve (5) is respectively fixed to an outer end face of one connecting plate (6).

14. The mechanically operational arrangement for continuously variable transmission of claim 6, **characterized in that** provided between the bowl openings of the two bowl-shaped wheels (2) are a plurality of annular wheels (3) that are circumferentially arranged in an equal space; wherein the annular wheels (13) are of the same amount as the connecting plates (6); wherein a bearing (14) is fitted into an inner circle of each annular wheel (13); and wherein two symmetrical points on an inner circle of each bearing (14) are respectively fixed to two side faces of one connecting plate (6) respectively.

15. The mechanically operational arrangement for continuously variable transmission of claim 14, **characterized in that** two ends of each pivot (11) are extended to be fixed to the two symmetrical points on the inner circle of one bearing (14).

## Patentansprüche

1. Mechanisch funktionsfähige Anordnung für ein stufenlos verstellbares Getriebe, aufweisend eine zentrale Welle (1) **gekennzeichnet durch** einen Abschnitt mit Zahnrillen (8), der umlaufend in einem mittleren Abschnitt einer äußeren Fläche der zentralen Welle (1) angeordnet ist; wobei eine Wellenhülse (9) über die äußere Fläche der zentralen Welle (1) gesetzt ist; wobei eine Mehrzahl axialer Begrenzungsnuten (10) an einer äußeren Fläche der Wellenhülse (9) geschaffen ist; wobei in jede der axialen Begrenzungsnuten (10) eine Verbindungsplatte (6) eingesetzt ist; wobei ein bogenförmiger Zahnradabschnitt (7) an einer inneren Stirnfläche jeder der Verbindungsplatten (6) angeordnet ist; wobei jeder der bogenförmigen Zahnradabschnitte (7) mit dem Zahnrillenabschnitt (8) verzahnt ist; wobei ein Zapfen (11) in einer Seitenfläche jeder der Verbindungsplatten (6) angebracht ist; und wobei jede der Verbindungsplatten (6) über den jeweiligen Zapfen (11) jeweils an einer Nutenwand einer der axialen Begrenzungsnuten (10) gelenkig angebracht ist.

2. Mechanisch funktionsfähige Anordnung für ein stufenlos verstellbares Getriebe nach Anspruch 1, **dadurch gekennzeichnet, dass** der Zahnrillenabschnitt (8) ein Abschnitt mit in gleichen Abständen angeordneten ringförmigen Zahnrillen mit einem Außendurchmesser kleiner oder gleich einem Durchmesser der zentralen Welle (1) ist.

3. Mechanisch funktionsfähige Anordnung für ein stufenlos verstellbares Getriebe nach Anspruch 1, **dadurch gekennzeichnet, dass** der Zahnrillenabschnitt (8) ein Abschnitt mit in gleichen Abständen angeordneten ringförmigen Zahnrillen mit einem Außendurchmesser größer einem Durchmesser der zentralen Welle (1) ist.

4. Mechanisch funktionsfähige Anordnung für ein stufenlos verstellbares Getriebe nach Anspruch 1, **dadurch gekennzeichnet, dass** der Zahnrillenabschnitt (8) ein Abschnitt mit spiralförmiger Zahnrille mit einem Außendurchmesser kleiner oder gleich einem Durchmesser der zentralen Welle (1) ist.

5. Mechanisch funktionsfähige Anordnung für ein stufenlos verstellbares Getriebe nach Anspruch 1, **dadurch gekennzeichnet, dass** der Zahnrillenabschnitt (8) ein Abschnitt mit spiralförmiger Zahnrille mit einem Außendurchmesser größer einem Durchmesser der zentralen Welle (1) ist.

6. Mechanisch funktionsfähige Anordnung für ein stufenlos verstellbares Getriebe nach einem der Ansprüche 1 - 5, **dadurch gekennzeichnet, dass** an beiden Enden der zentralen Welle (1) ein schalenförmiges Rad (2) angebracht ist, wobei Schalenöffnungen der zwei schalenförmigen Räder (2) einander zugewandt sind.

7. Mechanisch funktionsfähige Anordnung für ein stufenlos verstellbares Getriebe nach Anspruch 6, **dadurch gekennzeichnet, dass** zwei Enden der Wellenhülse (9) jeweils durch Schalenbodenmitten der zwei schalenförmigen Räder (2) geführt sind; und wobei zwei Enden der zentralen Welle (1) jeweils durch die Schalenbodenmitten der zwei schalenförmigen Räder (2) geführt sind.

8. Mechanisch funktionsfähige Anordnung für ein stufenlos verstellbares Getriebe nach Anspruch 6, **dadurch gekennzeichnet, dass** ein Ende der Wellenhülse (9) durch eine Schalenbodenmitte eines der schalenförmigen Räder (2) geführt ist, und das andere Ende der Wellenhülse (9) zwischen den Schalenöffnungen der zwei schalenförmigen Räder (2) angeordnet ist; und wobei zwei Enden der zentralen Welle (1) jeweils durch die Schalenbodenmitten der zwei schalenförmigen Räder (2) geführt sind.

9. Mechanisch funktionsfähige Anordnung für ein stufenlos verstellbares Getriebe nach Anspruch 6, **dadurch gekennzeichnet, dass** zwei Enden der Wellenhülse (9) jeweils zwischen den Schalenöffnungen der zwei schalenförmigen Räder (2) angeordnet sind; und wobei zwei Enden der zentralen Welle (1) jeweils durch die Schalenbodenmitten der zwei schalenförmigen Räder (2) geführt sind.

10. Mechanisch funktionsfähige Anordnung für ein stufenlos verstellbares Getriebe nach Anspruch 6, **dadurch gekennzeichnet, dass** ein Ende der Wellenhülse (9) durch eine Schalenbodenmitte eines der schalenförmigen Räder (2) geführt ist, und in einer Stirnfläche desselben mit einem axialen Durchgangsloch (12) versehen ist, und das andere Ende der Wellenhülse (9) zwischen den Schalenöffnungen der zwei schalenförmigen Räder (2) angeordnet ist; wobei ein Ende der zentralen Welle (1) durch die Schalenbodenmitte des anderen schalenförmigen Rads (2) geführt ist, und das andere Ende der zentralen Welle (1) zwischen den Schalenöffnungen der zwei schalenförmigen Räder (2) angeordnet ist.

11. Mechanisch funktionsfähige Anordnung für ein stufenlos verstellbares Getriebe nach Anspruch 10, **dadurch gekennzeichnet, dass** das axiale Durchgangsloch (12) einen Innendurchmesser gleich einem Außendurchmesser der zentralen Welle (1) aufweist.

12. Mechanisch funktionsfähige Anordnung für ein stufenlos verstellbares Getriebe nach Anspruch 10, **dadurch gekennzeichnet, dass** das axiale Durchgangsloch (12) einen Innendurchmesser kleiner einem Außendurchmesser der zentralen Welle (1) aufweist.

13. Mechanisch funktionsfähige Anordnung für ein stufenlos verstellbares Getriebe nach Anspruch 6, **dadurch gekennzeichnet, dass** zwischen den Schalenöffnungen der zwei schalenförmigen Räder (2) eine Mehrzahl zylindrischer Räder (3) bereitgestellt ist, die in einem gleichen Abstand in Umfangsrichtung angeordnet sind; wobei dieselbe Anzahl zylindrischer Räder (3) und Verbindungsplatten (6) bereitgestellt ist; wobei an beiden Enden jedes der zylindrischen Räder (3) eine Radkappe (4) bereitgestellt ist, und die zwei Radkappen (4) jedes der zylindrischen Räder (3) Innenflächen des jeweiligen der zwei schalenförmigen Räder (2) berühren; wobei eine Wellenhülse (5) über eine äußere Fläche jedes der zylindrischen Räder (3) gesetzt ist; und wobei die äußere Fläche jeder der Wellenhülsen (5) jeweils an einer äußeren Stirnfläche einer Verbindungsplatte (6) befestigt ist.

14. Mechanisch funktionsfähige Anordnung für ein stufenlos verstellbares Getriebe nach Anspruch 6, **dadurch gekennzeichnet, dass** zwischen den Schalenöffnungen der zwei schalenförmigen Räder (2) eine Mehrzahl ringförmiger Räder (3) bereitgestellt ist, die in einem gleichen Abstand in Umfangsrichtung angeordnet sind; wobei dieselbe Anzahl ringförmiger Räder (13) und Verbindungsplatten (6) bereitgestellt ist; wobei ein Lager (14) in einen inneren Kreis jedes der ringförmigen Räder (13) gesetzt ist; und wobei zwei symmetrische Punkte an einem inneren Kreis jedes der Lager (14) jeweils an zwei Seitenflächen einer jeweiligen Verbindungsplatte (6) befestigt sind.

15. Mechanisch funktionsfähige Anordnung für ein stufenlos verstellbares Getriebe nach Anspruch 14, **dadurch gekennzeichnet, dass** zwei Enden jedes der Zapfen (11) verlängert sind, um an den zwei symmetrischen Punkten an dem inneren Kreis eines der Lager (14) befestigt zu sein.

## Revendications

1. Agencement mécaniquement opérationnel pour une transmission à variation continue, comprenant un arbre central (1), **caractérisé en ce qu'**une section de rainure dentée (8) est agencée de manière circonférentielle dans une portion de milieu d'une surface externe de l'arbre central (1); dans lequel une chemise d'arbre (9) est ajustée sur la surface externe de l'arbre central (1) ; dans lequel une pluralité de rainures de limitation axiale (10) sont prévues sur une surface externe de la chemise d'arbre (9) ; dans lequel une plaque de raccordement (6) est insérée dans chaque rainure de limitation axiale (10) ; dans lequel une section de roue dentée en forme d'arc (7) est agencée sur une face d'extrémité intérieure de chaque plaque de raccordement (6) ; dans lequel chacune des sections de roue dentée en forme d'arc (7) est engrenée avec la section de rainure dentée (8) ; dans lequel un pivot (11) est monté dans une face latérale de chaque plaque de raccordement (6) ; et dans lequel chaque plaque de raccordement (6) est respectivement articulée sur une paroi de rainure d'une rainure de limitation axiale (10) par l'intermédiaire du pivot respectif (11).

2. Agencement mécaniquement opérationnel pour une transmission à variation continue selon la revendication 1, **caractérisé en ce que** la section de rainure dentée (8) est une section de rainure dentée annulaire de différence égale avec un diamètre extérieur inférieur ou égal à un diamètre de l'arbre central (1).

3. Agencement mécaniquement opérationnel pour une transmission à variation continue selon la revendication 1, **caractérisé en ce que** la section de rainure dentée (8) est une section de rainure dentée annulaire de différence égale avec un diamètre extérieur supérieur à un diamètre de l'arbre central (1).

4. Agencement mécaniquement opérationnel pour une transmission à variation continue selon la revendication 1, **caractérisé en ce que** la section de rainure dentée (8) est une section de rainure dentée en spirale avec un diamètre extérieur inférieur ou égal à un diamètre de l'arbre central (1).

5. Agencement mécaniquement opérationnel pour une transmission à variation continue selon la revendication 1, **caractérisé en ce que** la section de rainure dentée (8) est une section de rainure dentée en spirale avec un diamètre extérieur supérieur à un diamètre de l'arbre central (1).

6. Agencement mécaniquement opérationnel pour une transmission à variation continue selon l'une quelconque des revendications 1 à 5, **caractérisé en ce qu'**une roue en forme de bol (2) est montée à chaque extrémité de l'arbre central (1), des ouvertures de bol des roues en forme de bol (2) se faisant face l'une à l'autre.

7. Agencement mécaniquement opérationnel pour une transmission à variation continue selon la revendication 6, **caractérisé en ce que** deux extrémités de la chemise d'arbre (9) sont respectivement insérées à travers des centres inférieurs de bol des deux roues en forme de bol (2) ; et dans lequel deux extrémités de l'arbre central (1) sont respectivement insérées à travers les centres inférieurs de bol des deux roues en forme de bol (2).

8. Agencement mécaniquement opérationnel pour une transmission à variation continue selon la revendication 6, **caractérisé en ce qu'**une extrémité de la chemise d'arbre (9) est insérée à travers un centre inférieur de bol de l'une des roues en forme de bol (2) et l'autre extrémité de la chemise d'arbre (9) est positionnée entre les ouvertures de bol des deux roues en forme de bol (2) ; et dans lequel deux extrémités de l'arbre central (1) sont respectivement insérées à travers les centres inférieurs de bol des deux roues en forme de bol (2).

9. Agencement mécaniquement opérationnel pour une transmission à variation continue selon la revendication 6, **caractérisé en ce que** deux extrémités de la chemise d'arbre (9) sont toutes les deux positionnées entre les ouvertures de bol des deux roues en forme de bol (2) ; et dans lequel deux extrémités de l'arbre central (1) sont respectivement insérées à travers les centres inférieurs de bol des deux roues en forme de bol (2).

10. Agencement mécaniquement opérationnel pour une transmission à variation continue selon la revendication 6, **caractérisé en ce qu'**une extrémité de la chemise d'arbre (9) est insérée à travers un centre inférieur de bol de l'une des roues en forme de bol (2), et, dans une face d'extrémité de celle-ci, est pourvue d'un trou traversant axial (12) et l'autre extrémité de la chemise d'arbre (9) est positionnée entre les ouvertures de bol des deux roues en forme de bol (2) ; dans lequel une extrémité de l'arbre central (1) est insérée à travers le centre inférieur de bol de l'autre roue en forme de bol (2), et l'autre extrémité de l'arbre central (1) est positionnée entre les ouvertures de bol des deux roues en forme de bol (2).

11. Agencement mécaniquement opérationnel pour une transmission à variation continue selon la revendication 10, **caractérisé en ce que** le trou traversant axial (12) a un diamètre intérieur égal à un diamètre extérieur de l'arbre central (1).

12. Agencement mécaniquement opérationnel pour une transmission à variation continue selon la revendication 10, **caractérisé en ce que** le trou traversant axial (12) a un diamètre intérieur inférieur à un diamètre extérieur de l'arbre central (1).

13. Agencement mécaniquement opérationnel pour une transmission à variation continue selon la revendication 6, **caractérisé en ce qu'**il est prévu, entre les ouvertures de bol des deux roues en forme de bol (2), une pluralité de roues cylindriques (3) qui sont agencées de manière circonférentielle dans un espace égal ; dans lequel le nombre de roues cylindriques (3) est égal au nombre de plaques de raccordement (6) ; dans lequel une calotte de roue (4) est prévue à chaque extrémité de chaque roue cylindrique (3), et les deux calottes de roue (4) de chaque roue cylindrique (3) sont en contact respectivement avec des faces intérieures des deux roues en forme de bol (2) ; dans lequel une chemise de roue (5) est ajustée sur une surface externe de chaque roue cylindrique (3) ; et dans lequel la surface externe de chaque chemise de roue (5) est respectivement fixée à une face d'extrémité extérieure d'une plaque de raccordement (6).

14. Agencement mécaniquement opérationnel pour une transmission à variation continue selon la revendication 6, **caractérisé en ce qu'**il est prévu, entre les ouvertures de bol des deux roues en forme de bol (2), une pluralité de roues annulaires (3) qui sont agencées de manière circonférentielle dans un espace égal ; dans lequel le nombre de roues annulaires (13) est égal au nombre de plaques de raccordement (6) ; dans lequel un palier (14) est ajusté dans un cercle intérieur de chaque roue annulaire (13) ; et dans lequel deux points symétriques sur un cercle intérieur de chaque palier (14) sont fixés respectivement à deux faces latérales d'une plaque de raccordement (6).

15. Agencement mécaniquement opérationnel pour une transmission à variation continue selon la revendication 14, **caractérisé en ce que** deux extrémités de chaque pivot (11) sont étendues pour être fixées aux deux points symétriques sur le cercle intérieur d'un palier (14).
